# EUROPEAN PATENT SPECIFICATION

(11) **EP 4 714 642 B1**
(45) Date of publication and mention of the grant of the patent: **23.09.2026**
(21) Application number: 25204478.9
(22) Date of filing: 25.09.2025
(51) Int. Cl.: B29C 70/38, B29C 51/08, B29C 51/18, B29C 51/26, B29C 70/54, B29C 53/00, B29K 101/12

(54) **TRANSFER APPARATUS FOR STAMPING A THERMOPLASTIC COMPOSITE BLANK**
TRANSFERVORRICHTUNG ZUM PRÄGEN EINES THERMOPLASTISCHEN VERBUNDROHLINGS
DISPOSITIF DE TRANSFERT POUR L'ESTAMPAGE D'UNE ÉBAUCHE EN MATÉRIAU COMPOSITE THERMOPLASTIQUE

(30) Priority: 24.09.2024 FR 2410146
(43) Date of publication of application: 25.03.2026
(73) Proprietor: Daher Aerospace, 94310 Orly (FR)
(72) Inventor: ZAWADKA, Laurent, 44680 SAINTE PAZANNE (FR)
(74) Representative: Hamann, Jean-Christophe

(56) References cited:
- WO-A1-2021/118069
- DE-A1- 102015 102 691
- US-B2- 9 393 746

## Description

### TECHNICAL FIELD

The invention belongs to the field of composite materials with a thermoplastic polymer matrix, and improvement to shaping methods using forming by stamping.

### BACKGROUND

A method for stamping a thermoplastic composite blank reinforced by continuous fibers is described in document EP 1,543,942.

According to the teachings of this document, a blank of an adapted shape is cut from a consolidated or partially consolidated composite plate, then the blank is brought to a temperature of the order of a melting temperature of the polymer making the matrix of the composite, the blank, thus deconsolidated, is stamped between a punch and a stamping die before being cooled and reconsolidated into shape between the punch and the stamping die.

Continuous fibrous reinforcements, such as carbon fibers, do not exhibit plasticity, including at the melting temperature of the thermoplastic polymer, thus, shaping of the blank during stamping is achieved by interlaminar slipping of composite plies, which requires a reduced viscosity of the thermoplastic polymer matrix.

One of the difficulties of such a method is the ability to transfer the blank to a heating area, then, once the temperature of the blank has been raised to a melting point of the polymer matrix and while the blank has very little cohesion, to transfer it to a stamping station while ensuring precise positioning of the blank with respect to the stamping tooling.

The heating temperature of the blank before its stamping, being of the order of the melting temperature of the thermoplastic polymer making the matrix of the composite, after this heating, the blank has very little cohesion and is likely to sag under the effect of its own weight.

According to some prior art, the blank may rest on a heat-resistant polyimide film during these transfers.

To this end, a conveyor adapted to move the blank from the heating station to the stamping station may comprise a pair of parallel jaws configured to clamping the edges of a polyimide film format and tensioning this polyimide film between the jaws, the blank laying on the polyimide film. The polyimide film is thus used as a support for the blank and its transfer from one station to another.

In a first station, the blank, laying on the film, may be heated by radiant panels, in order to bring the polymer making the matrix of the blank to a temperature equal to or greater than its melting point.

The deconsolidated blank, still laying on the tensioned polyimide film, is brought above a tooling, comprising a punch an a stamping a die, then the blank, still on the polyimide film, is stamped by a punch pushing the blank and the film against the walls of a cavity of the stamping die, while the tension in the polyimide film is loosen.

The blank and the polyimide film are then contained in an airgap delimited by the walls of the cavity and the walls of the punch, defining a shape of a part to be obtained, A cooling cycle makes it possible to reconsolidate the part in shape while the thickness of the finished part is calibrated through the control of the airgap thickness.

This method of the prior art has several shortcomings, in particular the polyimide film which is stamped at the same time as the blank, wrinkles during this operation. The creases resulting from this wrinkling are imprinted in the polymer making the matrix of the part and may produce undesirable defects more particularly for demanding applications such as aeronautical applications.

In addition, the high-temperature resistant polyimide film is for single use only and is therefore a consumable of a relatively high cost, which directly affects the cost of a part obtained by such a method.

Document EP 3,065,931 describes an improvement to the method exposed above, in which the blank is transported from a heating station to a stamping station on a holding frame, the holding frame comprises means for precisely positioning the blank on the holding frame and means for precisely positioning the holding frame with respect to the stamping tooling.

This embodiment thus avoids the use of a polyimide film, however it requires specific tooling that is to be adapted to the conveyor.

Although this embodiment is satisfactory, it is nevertheless limited to blanks a mass of which is relatively low. Indeed, when a thickness and a mass of the blank increase, the heating time under the radiant panels also increases and the holding means of the transfer frame are no longer sufficient to maintain the blank.

Document EP 4,349,560 describes a transfer frame suitable for a thick and heavy thermoplastic composite blank. This device also requires to be adapted to the conveyor and requires more preparation of the blank.

Document DE102015102691 discloses a transfer frame for conveying a blank to be thermally formed and comprising heat resistant support elements spring mounted to the frame and supporting the blank.

Document US9393746B2 discloses the preamble of claim 1, namely a device for the preparation of a dry textile preform, the device comprising a tensioning frame, the dry textile preform being suspended inside the frame with spring suspensions.

### SUMMARY

A transfer apparatus for conveying a thermoplastic composite blank, comprising a mounting station, a heating station and a stamping station, further comprising a frame and a pair of conveying rails, the frame being configured to hod the thermoplastic composite blank and to be connected by couplings to the conveying rails, the frame further comprising a pair of jaws and a tensioning mechanism configured to maintain the jaws spaced apart from each other by a conveying width;
wherein the stamping station comprises a stamping die with a cavity and a punch configured to move in a stroke relative to the stamping die from an open position enabling the device holding the thermoplastic composite blank to be moved by the transfer apparatus between the stamping die and the punch and a closed position wherein the punch enters the cavity, a surface of the punch being distant from a surface of the cavity by a calibrated airgap; and
the thermoplastic composite blank comprises a shaping area configured to be shaped by stamping and supporting unidirectional fibers extending beyond edges of the shaping area and attached to the shaping area, the unidirectional fibers being pre-impregnated with a thermoplastic polymer;
wherein ends of the unidirectional fibers are clamped in the pair of jaws and tensioned to a conveying width, the shaping area being suspended between the jaws by the supporting unidirectional fibers.

The transfer apparatus, wherein the stamping station comprises guillotine blades configured to sever the unidirectional fibers during a stroke of the punch and to separate the ends of the unidirectional fibers clamped in the pair of jaws from the rest of the unidirectional fibers.

### BRIEF DESCRIPTION OF THE DRAWINGS

**FIG. 1** shows diagrammatic views of laminated composite blanks adapted to implementations and techniques of a method and a device for the transfer and the stamping of a thermoplastic composite blank;
**FIG. 2** shows a diagrammatic exploded view in perspective of another blank adapted to implementations and techniques of a method and a device for the transfer and the stamping of a thermoplastic composite blank;
**FIG. 3** shows in a top diagrammatic view, a device for holding a blank adapted to implementations and techniques of a method and a device for the transfer and the stamping of a thermoplastic composite blank;
**FIG. 4** shows in a top diagrammatic view and illustrative example of a transfer apparatus adapted to implementations and techniques of a method and a device for the transfer and the stamping of a thermoplastic composite blank;
**FIG. 5** shows in sectional diagrammatic views phases of a stamping operation in a transfer apparatus adapted to implementations and techniques of a method and a device for the transfer and the stamping of a thermoplastic composite blank;
**FIG. 6** shows in perspective view illustrative example of finished part obtained by implementing techniques of a method and a device for the transfer and the stamping of a thermoplastic composite blank;
**FIG. 7** shows in diagrammatic perspectives, an illustrative example of a finish part and a blank adapted to implementations of a method and a device for the transfer and the stamping of a thermoplastic composite blank;
**FIG. 8** shows in diagrammatic views, illustrative examples of jaws adapted to implementations and techniques of a method and a device for the transfer and the stamping of a thermoplastic composite blank.

### DETAILED DESCRIPTION

The method and device for the transfer and stamping of a thermoplastic composite blank, may avoid polyimide films and transfer frames for supporting composite blanks shaped by stamping, including during heating and with thick and heavy blanks, while saving costs and non-recyclable scraps of polyimide film.

The method and device for the transfer and stamping of a thermoplastic composite blank, may use blanks comprising a shaping area which may or may not comprise continuous fibers, and supporting unidirectional fibers pre-impregnated with a thermoplastic polymer, the unidirectional fibers being rigid and keeping their rigidity at high temperature, thus enabling a thick and heavy blank to be heated a longer time before stamping without risk of sagging, thus favoring a smooth interlaminar slipping and avoiding defects.

The method and device for the transfer and stamping of a thermoplastic composite blank, may further enable to control a tension in the plies of a laminated composite blank during stamping thus limiting or avoiding creasing and other defects for finished parts of complex shape.

An extra length of supporting unidirectional fibers may be removed from the finished part by conventional trimming and routing techniques, the scraps resulting from such trimming and routing may be recycled.

The device disclosed herein may easily be adapted to an existing transfer apparatus such as one used to transfer thermoplastic composite blanks on tensioned polyimide films.

Consolidation is step in the manufacturing of a composite part comprising a thermoplastic polymer matrix, where the part is cooled down under pressure from a temperature close to a melting point of the thermoplastic polymer making the matrix to a demolding temperature which may be a glass transition temperature of the thermoplastic polymer making the matrix. During this process degassing occurs, cavities in the lamination may be eliminated and molecular chains of the thermoplastic polymer develop, extending across the plies of the lamination, providing the composite part cohesion and its full mechanical properties.

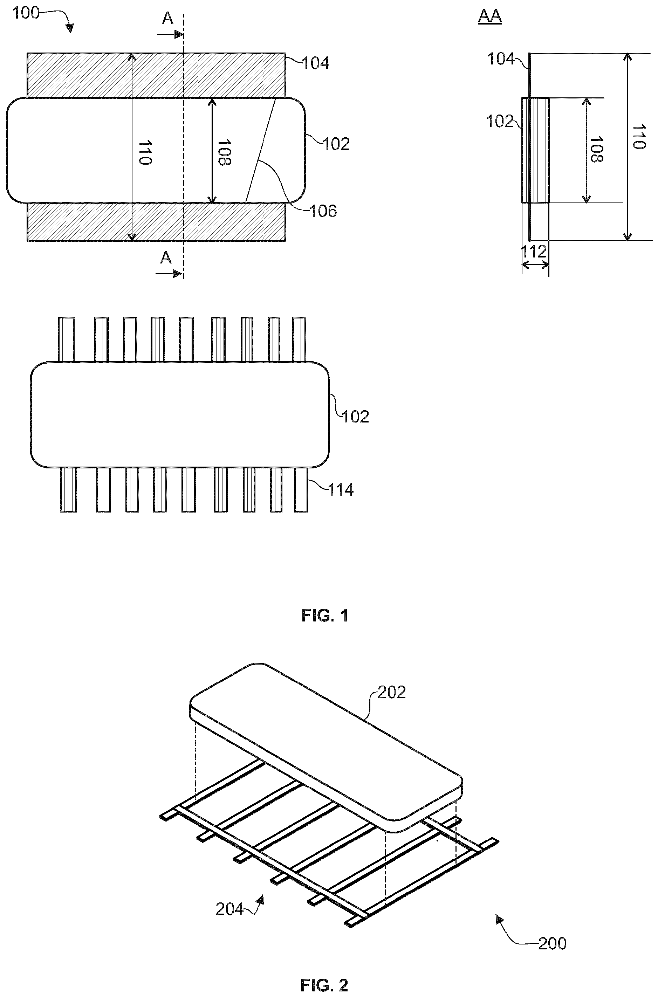

**FIG. 1** shows some embodiment of a composite blank (**100**) adapted for implementing techniques of transfer apparatus for stamping a thermoplastic composite blank. In this representation the blank (**100**) may be substantially planar and may comprise a shaping area (**102**) intended to be shaped by stamping and comprising a lamination of fibrous plies which may be deposited by tape laying techniques such as automatic fibers placement or other techniques. The fibrous plies may comprise continuous fibers (**106**) made of carbon, glass, aramid or other reinforcing materials in a thermoplastic polymer matrix. Continuous fibers (**106**) are fibers extending continuously from one edge to another of the blank. The thermoplastic polymer matrix may be made of a polymer of the Polyaryl Ether Ketone, the Polyetherimide, the Polyphenylene Sulfide, the Polyethylene Terephthalate families or other thermoplastic polymer families or combination thereof. The plies in the lamination may comprise fibers oriented in various directions, such as 0° parallel to a length of the blank, 90° parallel to a width (**108**) of blank and other angles such as 45° depending on the application of the final part issued from the blank. The shaping area may have a width (**108**) and a thickness (**112**) comprising the full lamination of plies. One or more plies (**104**) of the lamination may comprise an extension (hatched in **FIG. 1****)** beyond edges of the shaping part (**102**) over a width (**110**) larger than the width (**108**) of the shaping part.

The plies (**104**) comprising an extension beyond the edges of the shaping area (**102**) may be used to hold the blank (**100**) during conveying, stamping and other operations for making the final part, thus being holding plies. The holding plies (**104**) may be located at various heights in the lamination stack.

The extensions beyond the edges of the shaping area (**102**) of the holding plies (**104**) may be slit in holding tapes (**114**) comprising unidirectional fibers pre-impregnated with the thermoplastic polymer matrix. The holding tapes (**114**) may be used to hold the blank (**100**) during conveying, stamping and other operations for making the final part. The holding tapes may also be deposited by extending deposited pre-impregnated fiber tows beyond the edges of the shaping area (**102**) upon tape laying the blank by automatic fibers placement. Holding tapes (**114**) as well as holding plies (**104**) comprising unidirectional continuous fibers may exhibit a high rigidity suitable for holding suspended a blank comprising a thick and heavy shaping area.

**FIG. 2** shows a diagram (**200**) of another implementation of a blank adapted to techniques of a transfer apparatus for stamping a thermoplastic composite blank. A composite shaping blank (**202**) comprising a thermoplastic polymer matrix and reinforcing fibers, which may or may not comprise continuous fibers, and configured to be shaped by stamping, may be attached to a supporting grid (**204**) of holding tapes, for holding the blank suspended during conveying, stamping and other operations for making the final part. The supporting grid (**204**) of holding tapes may be obtained by tape laying, separately from the shaping blank, tapes comprising unidirectional continuous fibers pre-impregnated with the thermoplastic polymer making the matrix of the shaping blank or another polymer which may be miscible in the thermoplastic polymer making the matrix of the shaping blank. The shaping blank (**202**) may be secured to the supporting grid (**204**) of holding tapes with pieces of a high temperature resistant adhesive such as a polyimide-based adhesive. Therefore, during conveying, stamping and other operations for making the final part, the shaping (**202**) blank may rest secured on the supporting grid (**204**) of holding tapes.

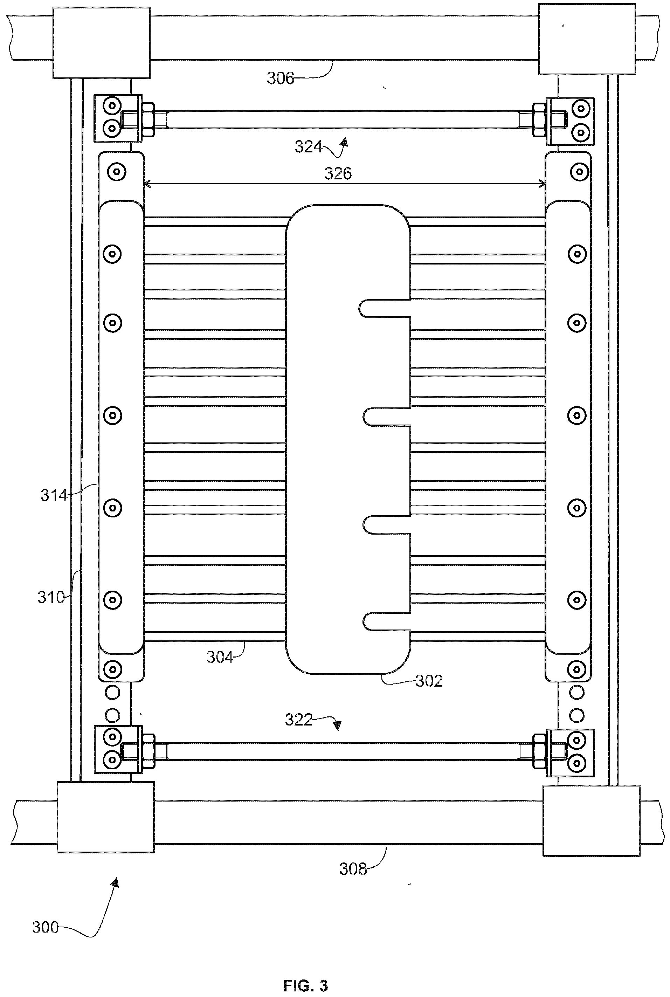

**FIG. 3** shows a diagram (**300**) of a frame for conveying a blank adapted for implementing techniques of the transfer apparatus for stamping a thermoplastic composite blank. The frame is adapted for conveying a blank obtained by the techniques disclosed in **FIG. 1** and **FIG. 2****,** comprising a shaping area (**302**) comprising reinforcing fibers in a thermoplastic polymer matrix, the blank further comprising holding tapes (**304**) or holding plies that may be extensions beyond the edges of the shaping area (**302**) of laminated plies or a supporting grid of holding tapes on which the shaping blank is attached. The holding tapes (**304**) may be the same or similar to the holing tapes (**114**) described in **FIG. 1****,** the supporting grid of holding tapes may be the same or similar to the supporting grid (**204**) of holding tapes disclosed in **FIG. 2** and the holdings plies may be the same or similar to the holding plies (**104**) disclosed in **FIG. 1****.** The shaping area (**302**) may be the same or similar to the shaping area (**102**) disclosed in **FIG. 1** or the same or similar to the shaping blank (**202**) disclosed in **FIG. 2****.**

The frame may comprise a pair of mounting bars (**310, 312**), pairs of jaws (**314, 316**) attached to the mounting bars (**310, 312**), one or more tensioning mechanisms (**322, 324**) configured to set a minimum conveying width (**326**) between the jaws of the pairs of jaws and/or other components.

The frame (**300**) may be connected to a transfer apparatus comprising a pair of conveying rails (**306, 308**) to which the mounting bars (**310, 312**) may be attached by couplings (**328**) which may be guided on the conveying rails (**306, 308**), at least one of the couplings (**328**) may be geared with a conveying mechanism configured to move the frame relative to he conveying rails (**306, 308**). Examples of such a conveying mechanism may include a ball screw and nut mechanism, a rack and pinion mechanism an a linear drive mechanism.

A tension in the holding tapes (304) or the holding plies may be set using the tensioning mechanisms (**322,** 324) upon setting the frame on the conveying rails

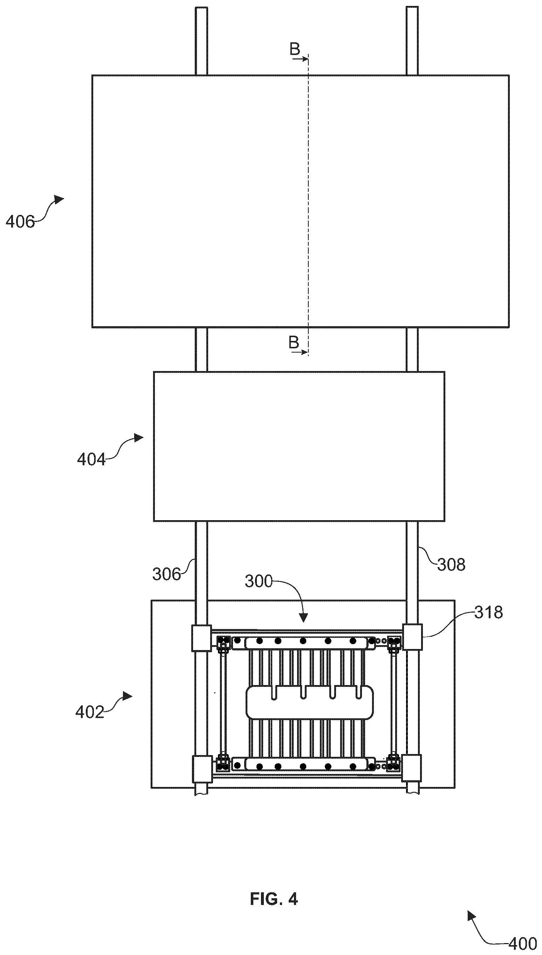

**FIG. 4** shows a diagram (**400**) of some embodiment of transfer apparatus adapted to techniques of the transfer apparatus for stamping a thermoplastic composite blank. The transfer apparatus may comprise a mounting station (**402**) where the blank may be set and tensioned on the frame **300** according to the techniques described herein. The frame **300** be coupled to conveying rails (**306, 308**) and be geared to a conveying mechanism through the couplings (**318**). Thus, the frame (**300**) holding the shaping area of the blank, suspended between the conveying rails through tensioned unidirectional fibers pre-impregnated with a thermoplastic polymer, may be moved from a mounting station (**402**) to a heating station (**404**) while the blank remains suspended between the conveying rails (**306, 308**) held by the holding tapes (**304**) or the holding plies. The blank may stay in the heating station (**404**), set on the device, until a temperature of the shaping area reaches a temperature close to a melting point of the thermoplastic polymer making the matrix of the blank and adapted to the shaping of the shaping area (**302**) or the shaping blank by stamping. Once the blank reaches an appropriate temperature, suitable for shaping by stamping, the frame (300) holding the blank may be moved by the conveying rails (**306, 308**) to a stamping station (**406**) where the shaping area, may be shaped by stamping, The blank may remain suspended between the conveying rails during the transfer from the heating station (**404**) to the stamping station (**406**) because the holding tapes or the holding plies comprising unidirectional fibers do not sag because of the heat and remain tensioned.

The heating station (**404**) may comprise infrared radiant panels or other heating means suitable for heating the blank.

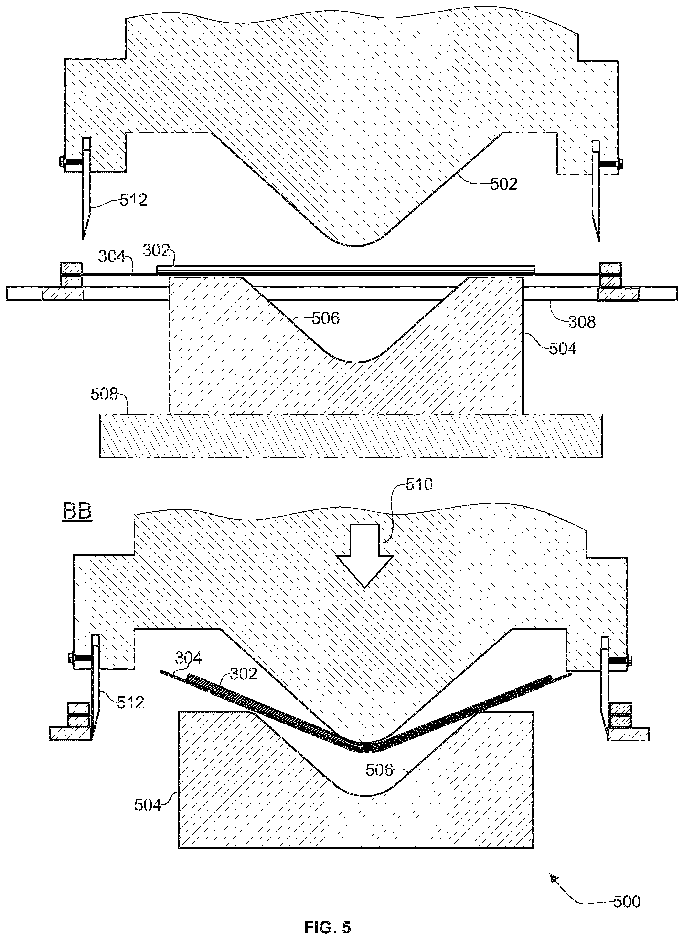

**FIG. 5** shows a diagrammatic sectional view (**500**) of a stamping station adapted to implementing techniques of the transfer apparatus for stamping a thermoplastic composite blank. The stamping station may comprise a stamping tooling comprising a punch (**502**) and a stamping die (**504**) comprising a cavity (**506**) and/or other components. The stamping tool may be set in a press comprising a press platen (**508**) to which the stamping die (**504**) may be attached, a ram to which the punch (**502**) may be attached, configured to move the punch (**502**) according to a stamping stroke (**510**), and/or other components.

The stamping stroke (**510**) may be comprised between an open position and a closed position. In the open position the punch (**502**) may be remote from the cavity (**506**), enabling the transfer apparatus to slide the frame holding the blank, suspended between the conveying rails (**308**) between the punch (**502**) and the stamping die (**504**) in a stamping position, where the shaping area (**302**) may be in a defined position relative to the cavity (**506**). The punch (**502**) may be aligned and paired with the cavity (**506**) and in the closed position the punch (**502**) enters the cavity (**506**) leaving a calibrated airgap between an outer surface of the punch and a surface of the cavity (**506**). The calibrated airgap may be the thickness of the final part obtained by the shaping by stamping of the blank.

A stamping operation may be performed by a stroke (**510**) of the punch (**502**) from the open position to the close position. During the stroke (**510**) the punch (**502**) may contact the shaping area (**302**) and may push it into the cavity (**506**), forcing the shaping area to fit the shapes of the punch (**502**) and of the cavity (**506**). When the blank comprises continuous fibers, the shaping may occur by interlaminar slipping of the plies inside the lamination, the interlaminar slipping being made possible by a low viscosity of the thermoplastic polymer matrix previously heated to a temperature close to its melting point in the heating station.

The holding tapes (**304**) or holding plies may remain rigid during the stamping operation. The ends of the holding tapes or holding plies being clamped in the jaws, the interlaminar slipping process of plies of the lamination comprising holding tapes or holding plies may be affected during the stamping operation and may result in localized delaminations or plies separations. To avoid such phenomenon the ends of the unidirectional fibers clamped in the pairs of jaws may be released shortly before or shortly after tip of the punch may contact the shaping area. To provide such an effect the clamping pressure of the pairs of jaws may be pilotable.

In some embodiment guillotine blades (**512**) may be attached to the punch (**502**) in a configuration, where the guillotine blades (512) may sever the holding tapes (304) or the holding plates or the holding ply, at a point of the stroke of the punch, thus separating ends of the holding tapes or holding plies still clamped in the pairs of jaws, from the rest of the holding tapes or holding plies.

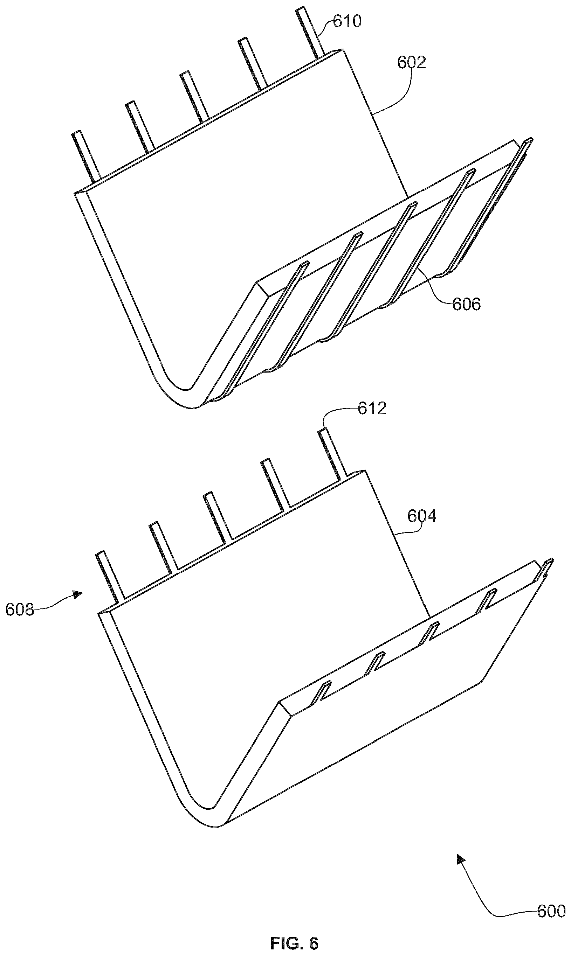

**FIG. 6** shows diagrammatic views (**600**) of finished parts which may be obtained by some implementations of techniques of the transfer apparatus for stamping a thermoplastic composite blank, after demolding and before trimming the extra lengths of the holding tapes or the holding plies. **FIG. 6** shows a first finished part (**602**) wherein a shaping blank similar to the shaping blank **(202)** of **FIG. 2** was stamped while resting secured on a supporting grid of holding tapes (**606**) similar to the supporting grid (**204)** of holding tapes of **FIG. 2****,** comprising unidirectional fibers pre-impregnated with a thermoplastic polymer, and a second finished part (**604**) wherein a shaping area similar to the shaping area **(102)** of **FIG. 1** was stamped while the shaping area was suspended by holding tapes (**608**) similar to the holding tapes (**114**) of **FIG. 1****,** the holding tapes being an extension beyond the edges of the shaping area of unidirectional fibers pre-impregnated with a thermoplastic polymer of a ply in the lamination.

In the first finished part (**602**), a part of the holding tapes (**606**) of the supporting grid which were stamped between the punch and the cavity of the stamping station with the shaping blank may be co-consolidated with the shaped shaping blank and be in material continuity with the lower face of the shaping blank on which the latter was resting on the supporting grid of holding tapes. An extra length (**610**) of the holding tapes may be removed when trimming or routing the contour of the finished part (**702**). The scraps resulting from such trimming or routing operation may be recycled according to a process disclosed in document EP 4 410 512 or another recycling process.

In the second finished part (**604**) a part of the holding tapes (**608**) or of the holding plies which were comprised in the lamination of the shaping area may be fully co-consolidated and shaped with the lamination and part of the structural plies in material continuity with the lamination. An extra length (**612**) of the holding tapes may be removed when trimming or routing the contour of the finished part (**604**). The scraps resulting from such trimming or routing operation may be recycled according to a process disclosed in document EP 4 410 512 or another recycling process.

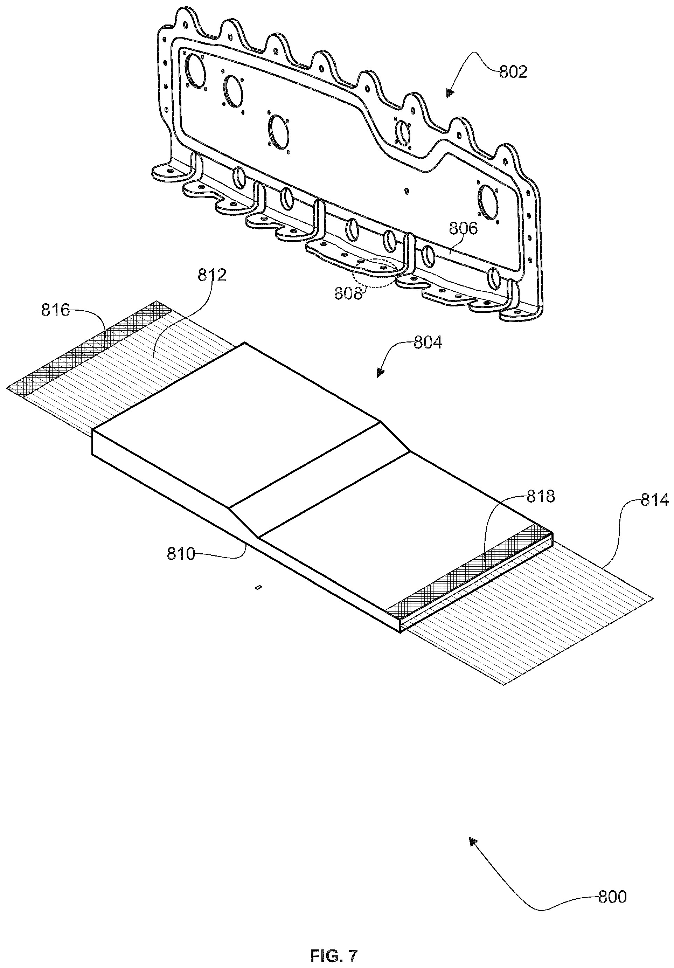

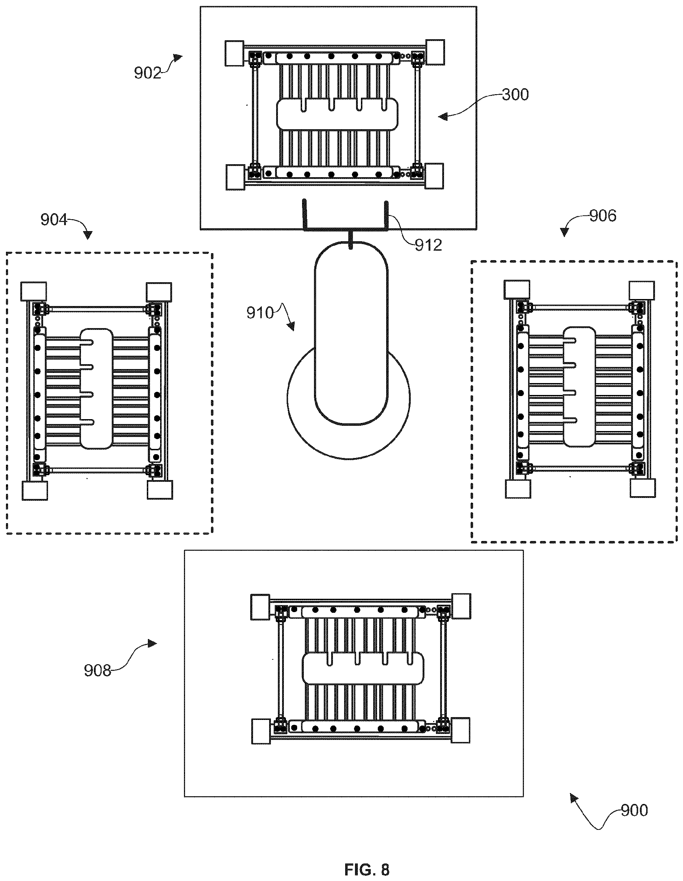

**FIG. 7** shows diagrammatic views (**800**) of a finished part (**802**) that may be manufactured with some implementations techniques disclosed herein. **FIG. 8** shows an illustrative finished partent (**802**) after trimming and machining, and a thermoplastic composite blank (**804**) configured to make the finished part (**802**) made of a composite material comprising continuous reinforcing fibers in a matrix made of a thermoplastic polymer, by stamping, implementing some techniques disclosed herein. The finished part may be of a non-developable 3D shape and may comprise thickness variations (**806**), joggling (**808**) or combination thereof. The blank (**804**) may comprise a shaping area (**810**) which may comprise a lamination of plies comprising continuous fibers in a thermoplastic polymer matrix. The shaping area (**810**) may comprise thickness variations to reflect thickness variations in the finish part (**802**). The blank (**804**) may further comprise unidirectional fibers extending outside the edges of the shaping part (810) and forming holding tapes or holding plies (**812, 814**), pre-impregnated with a thermoplastic polymer which may be the same polymer as the thermoplastic polymer making the matrix of the shaping area (**810**) or another polymer that may be miscible in the polymer making the thermoplastic polymer matrix. The holding tapes (**812, 814**) or holding plies may be extensions beyond the edges of the shaping area (**810**) of plies that are part of the lamination of the shaping area (**810**) and located at different heights in the lamination. The shaping area (**810**) may be the same or similar to the shaping areas (**102, 302**) of **FIG. 1** and **FIG. 2****,** the holding tapes (**812, 814**) or holding plies may be the same or similar to the holding tapes of holing plies (**104, 114, 304**) of **FIG. 1** and **FIG. 3****.**

The blank may be held in a frame by the holding tapes or holding plies **(812, 814**). In some other embodiment the blank (**804**) may be held in the frame on one side by the ends of the holding tapes (**816**) and on another side by an edge (**818**) of the shaping area, in conventional edge grippers

**FIG. 8** shows some implementation of a transfer apparatus (**900**) implementing techniques disclosed herein. The transfer apparatus (**900**) may comprise 4 stations, which may comprise an assembly station (**902**) where a blank comprising holding tapes or holding plies may be assembled with a frame (**300**). The frame (**300**) may be the same as or similar to the frame depicted in FIG. 3. The transfer apparatus may further comprise two heating stations (**904, 906**) the heating stations may be the same as of similar to the heating station (**404**) shown in **FIG. 4****.** The transfer apparatus may further comprise a stamping station (**908**), which may be the same as of similar to the stamping station (**406**) shown in **FIG. 4****.** The stations may be arranged around a robot (**910**) comprising a telescopic rotating arm comprising a gripper (**916**). The robot (**910**) may take a frame comprising a blank and move it from one station to another.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Features implementing functions may be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein. The scope of protection is defined by the appended claims.

## Claims

1. A transfer apparatus (400, 900) for conveying a thermoplastic composite blank (100, 200, 804) , comprising a mounting station (402, 902), a heating station (404, 904, 906) and a stamping station (406, 908), further comprising a frame (300) and a pair of conveying rails (306, 308), the frame being configured to hold the thermoplastic composite blank and to be connected by couplings (318) to the conveying rails, the frame further comprising a pair of jaws (314, 316) and a tensioning mechanism (322, 324) configured to maintain the jaws spaced apart from each other by a conveying width (326);
wherein the stamping station comprises a stamping die (504) with a cavity (506) and a punch (502) configured to move in a stroke (510) relative to the stamping die from an open position enabling the device holding the thermoplastic composite blank to be moved by the transfer apparatus between the stamping die and the punch and a closed position wherein the punch enters the cavity, a surface of the punch being distant from a surface of the cavity by a calibrated airgap; **characterised by**
the thermoplastic composite blank comprising a shaping area (102, 202, 302, 702, 704, 810) configured to be shaped by stamping and supporting unidirectional fibers (104, 114, 204, 304, 812, 814) extending beyond edges of the shaping area and attached to the shaping area, the unidirectional fibers being pre-impregnated with a thermoplastic polymer;
wherein ends of the unidirectional fibers are clamped in the pair of jaws and tensioned to a conveying width (326), the shaping area being suspended between the jaws by the supporting unidirectional fibers..

2. The transfer apparatus of claim 1, wherein the stamping station comprises guillotine blades (512) configured to sever the unidirectional fibers during a stroke of the punch and to separate the ends of the unidirectional fibers clamped in the pair of jaws from the rest of the unidirectional fibers.

## Patentansprüche

1. Eine Transfervorrichtung (400, 900) zum Transportieren eines thermoplastischen Verbundwerkstoff-Rohlings (100, 200, 804), umfassend eine Montagestation (402, 902), eine Heizstation (404, 904, 906) und eine Tiefziehennstation (406, 908), ferner umfassend einen Rahmen (300) und ein Paar Förderschienen (306, 308), wobei der Rahmen so ausgebildet ist, dass er den thermoplastischen Verbundrohling hält und über Kupplungen (318) mit den Förderschienen verbunden ist, und wobei der Rahmen ferner ein Paar Backen (314, 316) und einen Spannmechanismus (322, 324) umfasst, der so ausgebildet ist, dass er die Backen in einem Abstand voneinander hält, der einer Förderbreite (326) entspricht;
wobei die Tiefziehennstation ein Unterstempel (504) mit einem Matriz (506) und einen Stempel (502), der so ausgelegt ist, dass er sich in einem Hub (510) relativ zum Unterstempel von einer offenen Position - in der die Vorrichtung, die den thermoplastischen Verbundrohling hält, von der Transfervorrichtung zwischen das Unterstempel und den Stempel bewegt werden kann - in eine geschlossene Position bewegt, in der der Stempel in den Matriz eindringt, wobei eine Oberfläche des Stempels von einer Oberfläche des Hohlraums um einen kalibrierten Luftspalt beabstandet ist; **gekennzeichnet durch**
dass der thermoplastische Verbundwerkstoff-Rohling einen Formungsbereich (102, 202, 302, 702, 704, 810) umfasst, der so ausgebildet ist, dass er durch Tiefziehen geformt wird und unidirektionale Fasern (104, 114, 204, 304, 812, 814) zu stützen, die über die Ränder des Formungsbereichs hinausragen und an diesem befestigt sind, wobei die unidirektionalen Fasern mit einem thermoplastischen Polymer vorimprägniert sind;
wobei die Enden der unidirektionalen Fasern in dem Backenpaar eingespannt und auf eine Förderbreite (326) gespannt sind, wobei der Formungsbereich durch die tragenden unidirektionalen Fasern zwischen den Backen aufgehängt ist.

2. Die Übertragungsvorrichtung nach Anspruch 1, wobei die Tiefziehenstation Guillotine-Klingen (512) umfasst, die so ausgebildet sind, dass sie die unidirektionalen Fasern während eines Hubs des Stempels durchtrennen und die in dem Backenpaar eingespannten Enden der unidirektionalen Fasern vom Rest der unidirektionalen Fasern trennen.

## Revendications

1. Dispositif de transfert (400, 900) pour déplacer une ébauche composite thermoplastique (100, 200, 804), comprenant un poste de montage (402, 902), un poste de chauffage (404, 904, 906) et un poste d'estampage (406, 908), comprenant en outre un cadre (300) et une paire de rails de transport (306, 308), le cadre étant configuré pour maintenir l'ébauche composite thermoplastique et pour être lié par des accouplements (318) aux rails de transport, le cadre comprenant en outre une paire de mâchoires (314, 316) et un mécanisme de tension (322, 324) configuré pour maintenir les mâchoires espacées l'une de l'autre d'une largeur de transport (326) ;
dans lequel le poste d'estampage comprend une matrice d'estampage (504) avec une cavité (506) et un poinçon (502) configuré pour se déplacer selon une course (510) par rapport à la matrice d'estampage à partir d'une position ouverte permettant au dispositif maintenant l'ébauche composite thermoplastique d'être déplacé par le dispositif de transfert entre la matrice d'estampage et le poinçon et une position fermée dans laquelle le poinçon pénètre dans la cavité, une surface du poinçon étant distante d'une surface de la cavité par un entrefer calibré ; **caractérisé en ce que**
l'ébauche composite thermoplastique comprend une zone mise en forme (102, 202, 302, 702, 704, 810) configurée pour être mise en forme par estampage et des fibres unidirectionnelles de support (104, 114, 204, 304, 812, 814) s'étendant au-delà des bords de la zone mise en forme et attachées à la zone mise en forme, les fibres unidirectionnelles étant pré-imprégnées d'un polymère thermoplastique ;
dans lequel les extrémités des fibres unidirectionnelles sont serrées dans la paire de mâchoires et tendues à la largeur de transport (326), la zone de mise forme étant suspendue entre les mâchoires par les fibres unidirectionnelles de support.

2. Dispositif de transfert selon la revendication 1, dans lequel le poste d'estampage comprend des lames guillotines (512) configurées pour couper les fibres unidirectionnelles pendant la course du poinçon et pour séparer des extrémités des fibres unidirectionnelles serrées dans la paire de mâchoires du reste des fibres unidirectionnelles.
